# EUROPEAN PATENT APPLICATION

(11) **EP 4 307 195 A1**
(43) Date of publication of application: **17.01.2024**
(21) Application number: 22766985.0
(22) Date of filing: 03.03.2022
(51) Int. Cl.: G06Q 10/08

(54) **INFORMATION PROCESSING DEVICE, INFORMATION PROCESSING METHOD, PROGRAM, AND SYSTEM**

(30) Priority: 11.03.2021 JP 2021038980
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: OTSURU, Yoshihide, Kawasaki-shi, Kanagawa 212-0013 (JP); MARUYAMA, Osamu, Kawasaki-shi, Kanagawa 212-0013 (JP); HORIUCHI, Haruhiko, Kawasaki-shi, Kanagawa 212-0013 (JP)
(74) Representative: Horn Kleimann Waitzhofer Schmid-Dreyer Patent- und Rechtsanwälte PartG mbB
(86) International application number: PCT/JP2022/009117
(87) International publication number: WO 2022/191027

(57) **Abstract**

There is provided an information processing apparatus, an information processing method, program, and system by which a cargo-handling apparatus is appropriately selected from among a plurality of cargo-handling apparatuses. According to one embodiment, the information processing apparatus includes a communication interface and a processor. The communication interface is connected to an external device. The processor acquires cargo-handling information relating to cargo-handling work through the communication interface, and selects a cargo-handling apparatus to be caused to perform the cargo-handling work from among a plurality of cargo-handling apparatuses based on the cargo-handling information.

## Description

### FIELD

Embodiments described herein relate generally to an information processing apparatus, an information processing method, program, and system.

### BACKGROUND

A system is provided for formulating a cargo loading plan for efficient loading (or unloading). Such a system formulates a cargo loading plan indicating an appropriate loading order, positions of pieces of cargo, and the like based on the size, shape, weight, and the like of the pieces of cargo (articles).

In recent years, there has been provided a system in which loading is performed by using a cargo-handling apparatus including a robot or the like.

A conventional system has a problem in that it cannot select an appropriate cargo-handling apparatus from among a plurality of cargo-handling apparatuses and formulate a cargo loading plan so that a worker loads a piece of cargo which cannot be loaded by the cargo-handling apparatus.

### CITATION LIST

### PATENT LITERATURE

PATENT LITERATURE 1: Jpn. Pat. Appln. KOKAI Publication No. 2019-159397

### SUMMARY

### TECHNICAL PROBLEM

To solve the problem described above, an information processing apparatus, an information processing method, a program, and a system capable of effectively performing cargo-handling work are provided.

### SOLUTION TO PROBLEM

According to one embodiment, the information processing apparatus includes a communication interface and a processor. The communication interface is connected to an external device. The processor acquires cargo-handling information relating to cargo-handling work through the communication interface, and selects a cargo-handling apparatus to be caused to perform the cargo-handling work from among a plurality of cargo-handling apparatuses based on the cargo-handling information.

### BRIEF DESCRIPTION OF THE DRAWINGS

FIG. 1 is a block diagram illustrating a configuration example of a cargo-handling system according to an embodiment.
FIG. 2 is a block diagram illustrating a configuration example of a planning apparatus according to the embodiment.
FIG. 3 is a diagram illustrating a configuration example of a database according to the embodiment.
FIG. 4 is a sequence diagram illustrating an operation example of the cargo-handling system according to the embodiment.
FIG. 5 is a sequence diagram illustrating an operation example of the cargo-handling system according to the embodiment.

### DETAILED DESCRIPTION

Hereinafter, an embodiment will be described with reference to the drawings.

A cargo-handling system according to an embodiment loads and unloads pieces of cargo using a cargo-handling apparatus such as a robot. For loading, the cargo-handling system takes out a piece of cargo from a warehouse or the like and puts the piece of cargo into a storage container. For unloading, the cargo-handling system takes out a piece of cargo from a storage container and stores the piece of cargo in a warehouse or the like. In addition, the cargo-handling system may load and unload a piece of cargo using a worker depending on the piece of cargo or the like.

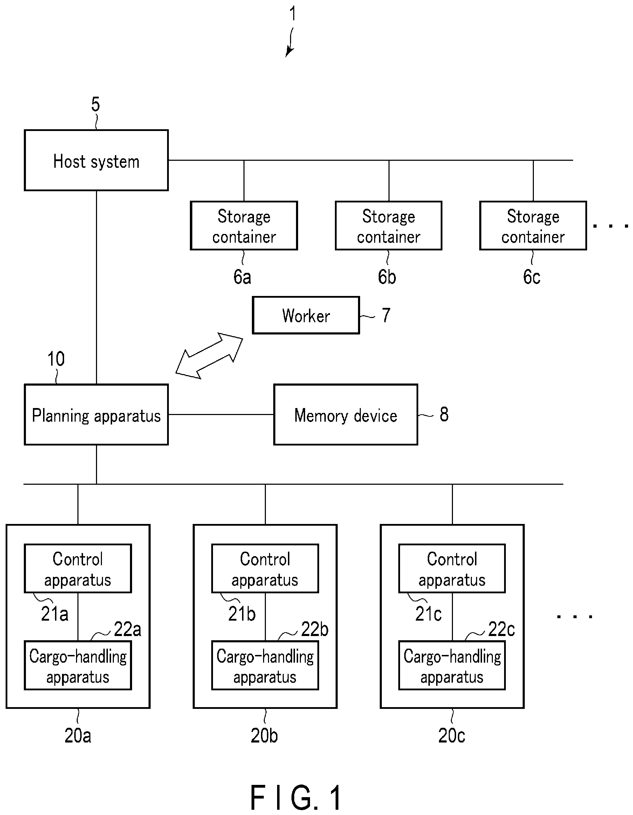

FIG. 1 illustrates a configuration example of a cargo-handling system 1 according to the embodiment. As illustrated in FIG. 1, the cargo-handling system 1 includes a host system 5, storage containers 6, a worker 7, a memory device 8, a planning apparatus 10, work systems 20, and the like. The work system 20 includes a control apparatus 21 and a cargo-handling apparatus 22. The host system 5 is connected to the storage containers 6 and the planning apparatus 10. The planning apparatus 10 is connected to the memory device 8 and the work systems 20. The control apparatus 21 is connected to the cargo-handling apparatus 22.

The cargo-handling system 1 may include other configurations as necessary in addition to the configuration illustrated in FIG. 1, or a specific configuration may be excluded from the cargo-handling system 1.

The host system 5 controls the entire cargo-handling system 1. The host system 5 transmits cargo-handling information relating to the cargo-handling work to the plan information. Here, as the cargo-handling information, the host system 5 transmits to the planning apparatus 10 loading information indicating a piece of cargo to be loaded and unloading information indicating a piece of cargo to be unloaded. For example, the host system 5 is a warehouse management system (WMS) or the like. The host system 5 includes a PC or the like.

The host system 5 (external device) manages the storage containers 6. For example, in a case of loading, the host system 5 arranges an empty storage container 6. For example, the host system 5 conveys the empty storage container 6 to a predetermined position.

In addition, in a case of unloading, the host system 5 receives a storage container 6 that stores the piece of cargo to be unloaded. For example, the host system 5 conveys the storage container 6 storing the piece of cargo to a predetermined position.

The storage container 6 is a container for storing a piece of cargo. Here, the cargo-handling system 1 includes a plurality of storage containers 6 (6a, 6b,...). For example, the storage container 6 is a container, a pallet, a roll box pallet, or the like. The configuration of the storage container 6 is not limited to a particular configuration.

The planning apparatus 10 (information processing apparatus) controls the work system 20 in accordance with a signal from the host system 5. The planning apparatus 10 makes a work plan based on loading information and unloading information from the host system 5. Here, the planning apparatus 10 generates loading plan information indicating a loading plan and unloading plan information indicating an unloading plan. The planning apparatus 10 transmits a control signal to the work system 20 based on the loading plan information or the unloading plan information.

For example, the planning apparatus 10 is a warehouse execution system (WES) or the like. The planning apparatus 10 will be described in detail later.

The work system 20 performs cargo-handling work in accordance with a control signal from the planning apparatus 10. Here, the work system 20 performs loading work to the storage container 6 and unloading work from the storage container 6 as the cargo-handling work.

The cargo-handling system 1 includes a plurality of work systems 20 (20a, 20b,...).

The work systems 20 (20a, 20b,...) each include a control apparatus 21 (21a, 21b,...) and a cargo-handling apparatus 22 (22a, 22b,...).

The control apparatus 21 functions as a controller of the cargo-handling apparatus 22. The control apparatus 21 controls the cargo-handling apparatus 22 in accordance with a control signal from the planning apparatus 10. For example, the control apparatus 21 is a warehouse control system (WCS) or the like. The control apparatus 21 includes a PC, a programmable logic controller (PLC), or the like.

The cargo-handling apparatus 22 performs work relating to the piece of cargo under the control of the control apparatus 21. For example, the cargo-handling apparatus 22 grips a piece of cargo from a warehouse or the like and puts the piece of cargo into the storage container 6. Further, the cargo-handling apparatus 22 grips the piece of cargo stored in the storage container 6 and releases the piece of cargo to a predetermined position.

The cargo-handling apparatuses 22 are different in type from one another. For example, each cargo-handling apparatus 22 is an apparatus capable of loading or unloading. Each cargo-handling apparatus 22 is an apparatus capable of handling each storage container 6. Each cargo-handling apparatus 22 is an apparatus capable of handling various types of cargo.

For example, the cargo-handling apparatus 22 is a vanning robot that performs loading work on a container serving as the storage container 6, a devanning robot that performs unloading work from a container serving as the storage container 6, a palletizing robot that performs loading work on a pallet serving as the storage container 6, or the like. The cargo-handling apparatus 22 may be a conveyor, an automated guided vehicle (AGV), or the like.

The configuration of the cargo-handling apparatus 22 is not limited to a specific configuration.

The memory device 8 stores a database including storage container information relating to the storage container 6, cargo information relating to pieces of cargo, and cargo-handling apparatus information relating to the cargo-handling apparatus 22. The memory device 8 supplies the database to the planning apparatus 10.

The memory device 8 may be a hard disk drive (HDD), a solid state drive (SSD), or a flash memory non-volatile memory that stores the database. In this case, the memory device 8 is connected to the planning apparatus 10 by a universal serial bus (USB) connection or the like.

Further, the memory device 8 may be a data server constituted by a PC or the like. In this case, the memory device 8 supplies the database to the planning apparatus 10 via a network or the like.

The worker 7 performs cargo-handling work. Here, the worker 7 performs loading work to the storage container 6 and unloading work from the storage container 6 as the cargo-handling work. The worker 7 performs loading work to the storage container 6 and unloading work from the storage container 6 in accordance with a notification from the planning apparatus 10.

Next, the planning apparatus 10 will be described.

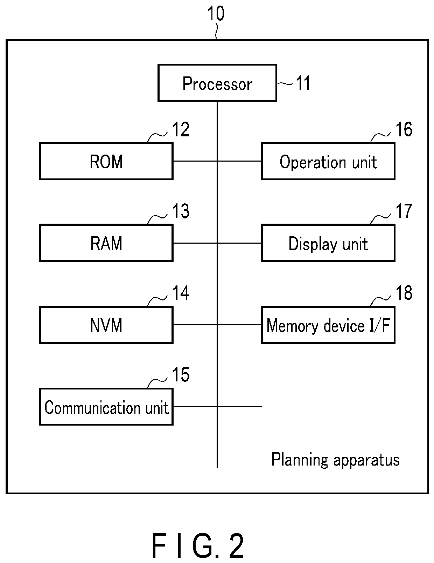

FIG. 2 is a block diagram illustrating a configuration example of the planning apparatus 10. As illustrated in FIG. 2, the planning apparatus 10 includes a processor 11, a ROM 12, a RAM 13, an NVM 14, a communication unit 15, an operation unit 16, a display unit 17, a memory device interface 18, and the like.

The processor 11 is connected to the ROM 12, the RAM 13, the NVM 14, the communication unit 15, the operation unit 16, the display unit 17, and the memory device interface 18 via a bus or the like.

The planning apparatus 10 may include other configurations as necessary in addition to the configuration illustrated in FIG. 2, or a specific configuration may be excluded from the planning apparatus 10.

The processor 11 has a function of controlling the operation of the entire planning apparatus 10. The processor 11 may include an internal cache, various interfaces, and the like. The processor 11 realizes various processes by executing a program stored in advance in the internal memory, the ROM 12, or the NVM 14.

Note that some of the various functions realized by the processor 11 executing the program may be realized by a hardware circuit. In this case, the processor 11 controls the functions performed by the hardware circuit.

The ROM 12 is a non-volatile memory in which control programs and control data have been stored in advance. The control program and control data stored in the ROM 12 are incorporated in advance according to the specifications of the planning apparatus 10.

The RAM 13 is a volatile memory. The RAM 13 temporarily stores data that is being processed by the processor 11. The RAM 13 stores various application programs based on instructions from the processor 11. The RAM 13 may store data necessary for executing the application programs, execution results of the application programs, and the like.

The NVM 14 is a data-writable and rewritable non-volatile memory. The NVM 14 is constituted by, for example, an HDD, an SSD, a flash memory, or the like. The NVM 14 stores a control program, an application, and various kinds of data according to the operation purpose of the planning apparatus 10.

The communication unit 15 (communication interface) is an interface for communicating with the host system 5, the work system 20 (that is, the control apparatus 21), and the like. For example, the communication unit 15 is an interface for transmitting and receiving data to and from the host system 5, the work system 20, and the like through a network. For example, the communication unit 15 is an interface that supports wired or wireless LAN connection. The communication unit 15 may include an interface for communicating with the host system 5 and an interface for communicating with the work system 20.

The operation unit 16 receives inputs of various operations from the worker 7 or the like. The operation unit 16 transmits a signal indicating the input operation to the processor 11. The operation unit 16 may be constituted by a touch panel.

The display unit 17 displays image data from the processor 11. For example, the display unit 17 is constituted by a liquid crystal monitor. In a case where the operation unit 16 is constituted by a touch panel, the display unit 17 may be formed integrally with the operation unit 16.

The memory device interface 18 is an interface to be connected to the memory device 8. For example, the memory device interface 18 supports a USB connection. The memory device interface 18 may also support a wired or wireless LAN connection. Further, the memory device interface 18 may be integrally formed with the communication unit 15.

Next, a database stored in the memory device 8 will be described.

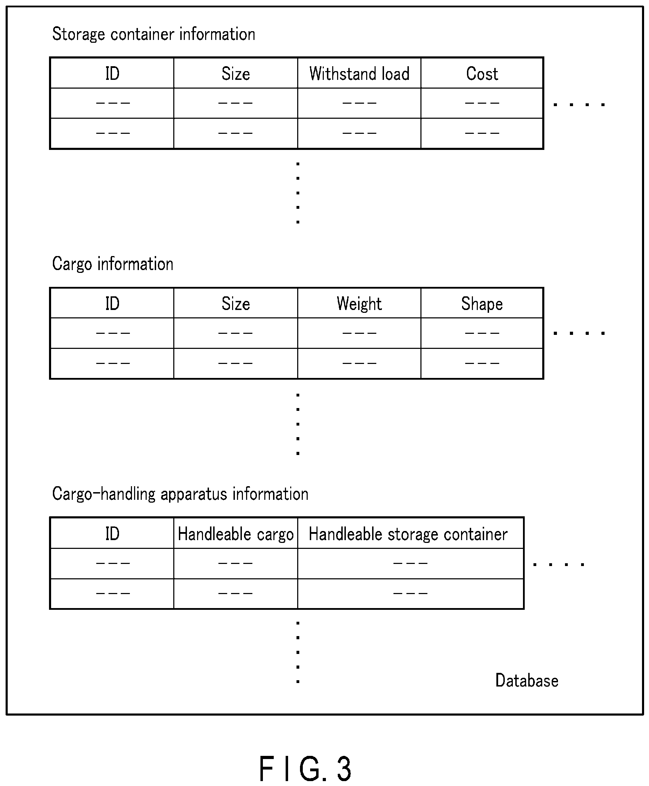

FIG. 3 illustrates a configuration example of the database. As illustrated in FIG. 3, the database includes storage container information, cargo information, cargo-handling apparatus information, and the like.

The storage container information relates to the storage containers 6. The storage container information indicates characteristics of each storage container 6. In the example illustrated in FIG. 3, the storage container information includes an "ID", a "size", a "withstand load", a "cost", and the like.

The "ID" indicates an identifier for identifying the storage container 6.

The "size" indicates dimensions of an area into which pieces of cargo can be put. For example, the "size" indicates a longitudinal width, a transverse width, and a height inside the storage container 6.

The "withstand load" indicates a load that the storage container 6 can withstand. That is, the "withstand load" is the weight of a piece of cargo that can be loaded into the storage container 6. Alternatively, the "withstand load" may be the weight of the cargo-handling apparatus 22 that can enter the storage container 6.

The "cost" indicates expenses required to use the storage container 6. For example, in the case where the storage container 6 is a container, the "cost" indicates expenses for arranging a truck or the like for transporting the container.

The storage container information may include other configurations as necessary in addition to the configuration illustrated in FIG. 3, or a specific configuration may be excluded from the storage container information.

The cargo information relates to a piece of cargo to be loaded and a piece of cargo to be unloaded. The cargo information indicates characteristics for each type of cargo. In the example illustrated in FIG. 3, the cargo information includes an "ID", a "size", a "weight", a "shape", and the like.

The "ID" indicates an identifier for identifying a piece of cargo.

The "size" indicates outer dimensions of the piece of cargo. For example, the "size" indicates a longitudinal width, a transverse width, and a height of the piece of cargo.

The "weight" indicates the weight of the piece of cargo.

The "shape" indicates the shape of the piece of cargo. For example, the "shape" indicates a rectangle, a sphere, or the like. Note that the "shape" may be configured integrally with the "size".

The cargo information may further indicate the ease of deformation (index or the like) of the piece of cargo. The cargo information may include other configurations as necessary in addition to the configuration illustrated in FIG. 3, or a specific configuration may be excluded from the cargo information.

The cargo-handling apparatus information relates to the cargo-handling apparatus 22. The cargo-handling apparatus information indicates characteristics of each cargo-handling apparatus 22. In the example illustrated in FIG. 3, the cargo-handling apparatus information includes an "ID", a "handleable cargo", a "handleable storage container", and the like.

The "ID" indicates an identifier for identifying the cargo-handling apparatus 22.

The "handleable cargo" indicates a piece of cargo that can be processed by the cargo-handling apparatus 22. For example, the "handleable cargo" indicates a piece of cargo that can be gripped by the cargo-handling apparatus 22. The "handleable cargo" indicates the ID of the piece of cargo.

The "handleable storage container" indicates a storage container 6 that is handled by the cargo-handling apparatus 22. That is, the "handleable storage container" indicates the storage container 6 from or into which the cargo-handling apparatus 22 can unload or load the piece of cargo. The "handleable storage container" indicates the ID of the storage container 6.

For example, the "handleable storage container" is determined based on whether the cargo-handling apparatus 22 can enter the storage container 6, whether the cargo-handling apparatus 22 can be supported by the withstand load of the storage container 6, whether a movable range of the cargo-handling apparatus 22 in the storage container 6 is sufficient, or the like.

The cargo-handling apparatus information may include other configurations as necessary in addition to the configuration illustrated in FIG. 3, or a specific configuration may be excluded from the cargo-handling apparatus information.

Next, a function and an operation example of the cargo-handling system 1 will be described.

A case where the cargo-handling system 1 performs loading will be described.

First, functions realized by the host system 5 will be described.

The host system 5 has a function of causing the planning apparatus 10 to update the database.

The host system 5 transmits an update request for updating the database to the planning apparatus 10. For example, the update request includes a database. Here, the planning apparatus 10 updates the database in accordance with the update request.

The host system 5 has a function of transmitting loading information to the planning apparatus 10.

For example, the host system 5 acquires slip information indicating an order for a piece of cargo or the like from an external device. The host system 5 generates loading information based on the slip information or the like.

The loading information indicates a piece of cargo to be loaded (for example, an ID of the piece of cargo), the number of pieces of cargo, a destination, and the like.

Upon generating the loading information, the host system 5 transmits the generated loading information to the planning apparatus 10.

The host system 5 also has a function of arranging the storage container 6 and the worker 7.

The host system 5 acquires loading plan information from the planning apparatus 10. The loading plan information indicates the storage container 6 into which pieces of cargo are put, a box packing plan relating to input of the pieces of cargo, the cargo-handling apparatus 22 that performs loading, and the like.

Upon acquiring the loading plan information, the host system 5 arranges the storage container 6 indicated by the loading plan information. For example, the host system 5 conveys the storage container 6 to a predetermined position.

In a case where the loading plan information indicates the allocation of the loading work to the worker 7, the host system 5 arranges the worker 7 in accordance with the loading plan information. For example, the host system 5 issues a notification to the worker 7 to move to a predetermined position and perform work.

The host system 5 also has a function of transmitting a loading request to request starting of loading work to the planning apparatus 10.

Upon completing the arrangement of the storage container 6 and the worker 7, the host system 5 transmits the loading request to the planning apparatus 10.

The host system 5 may transmit the loading request to the planning apparatus 10 at a timing (for example, the next day or the next week) at which loading is desired to be performed after the arrangement is completed. In addition, the host system 5 may transmit, as the loading request, information that indicates a date and time when loading is to be started, to the planning apparatus 10. That is, the host system 5 may make a loading start reservation in the planning apparatus 10.

Next, functions realized by the planning apparatus 10 will be described. The functions realized by the planning apparatus 10 are realized by the processor 11 executing the program stored in the internal memory, the ROM 12, the NVM 14, or the like.

First, the processor 11 has a function of updating the database.

The processor 11 receives an update request from the host system 5 through the communication unit 15. Upon receiving the update request, the processor 11 updates the database in accordance with the update request through the memory device interface 18. Upon updating the database, the processor 11 transmits a response (update result) indicating the completion of the update to the host system 5 through the communication unit 15.

The processor 11 also has a function of generating loading plan information.

The processor 11 acquires the loading information from the host system 5 through the communication unit 15. Upon acquiring the loading information, the processor 11 acquires the database from the memory device 8 through the memory device interface 18.

Upon acquiring the database, the processor 11 generates loading plan information based on the loading information and the database.

For example, the processor 11 acquires features ("size" or the like) of the pieces of cargo indicated by the loading information from the cargo information in the database. Upon acquiring the features of the pieces of cargo, the processor 11 generates a box packing plan for each storage container 6 based on the features of the pieces of cargo and the like. The box packing plan indicates the location and order of loading. For example, the processor 11 generates a box packing plan such that a heavier piece of cargo is in a lower portion and a lighter piece of cargo is in an upper portion.

Upon generating the box packing plan for each storage container 6, the processor 11 selects a storage container 6 from among the loadable storage containers 6. For example, the processor 11 selects a storage container 6 having a small empty space (the storage container 6 having a large loading rate). Alternatively, the processor 11 may select a storage container 6 that is low in cost. The method by which the processor 11 selects the storage container 6 is not limited to a specific method.

Upon selecting the storage container 6, the processor 11 selects the cargo-handling apparatus 22 capable of handling the pieces of cargo and the storage container 6 with reference to the cargo-handling apparatus information.

In a case where there is a piece of cargo that cannot be handled by the cargo-handling apparatus 22, the processor 11 allocates the loading work of the piece of cargo to the worker 7. In this case, the processor 11 may update the box packing plan so that the piece of cargo is to be loaded later. That is, the processor 11 updates the box packing plan so that the loading by the cargo-handling apparatus 22 is performed first.

Upon selecting the cargo-handling apparatus 22, the processor 11 generates loading plan information indicating the selected storage container 6, the box packing plan for the storage container 6, the selected cargo-handling apparatus 22, and the like. In a case where the loading work is allocated to the worker 7, the loading plan information further indicates the allocation of the loading work to the worker 7.

Further, another example in which the processor 11 generates loading plan information will be described.

The processor 11 refers to the cargo-handling apparatus information in the database and selects the cargo-handling apparatus 22 capable of handling the piece of cargo indicated by the loading information from the cargo information. Upon selecting the cargo-handling apparatus 22, the processor 11 refers to the cargo-handling apparatus information and selects storage containers 6 capable of handling the selected cargo-handling apparatus 22.

Upon selecting the storage containers 6, the processor 11 generates a box packing plan for each of the selected storage containers 6 on the basis of the characteristics of the piece of cargo and the like. Upon generating the box packing plan for each storage container 6, the processor 11 selects a storage container 6 capable of storing the piece of cargo from among the selected storage containers 6.

Upon selecting the storage container 6, the processor 11 generates loading plan information indicating the selected storage container 6, a box packing plan for the storage container 6, the selected cargo-handling apparatus 22, and the like. In a case where the loading work is allocated to the worker 7, the loading plan information further indicates the allocation of the loading work to the worker 7.

Upon generating the loading plan information, the processor 11 transmits the generated loading plan information to the host system 5 through the communication unit 15.

The processor 11 has a function of causing the work system 20 to perform the loading work.

Here, it is assumed that the storage container 6 indicated by the loading plan information is arranged by the host system 5.

The processor 11 receives the loading request through the communication unit 15. Upon receiving the loading request, the processor 11 transmits a loading execution request for instructing execution of loading to the work system 20 including the cargo-handling apparatus 22 indicated by the loading plan information through the communication unit 15.

The loading execution request causes the cargo-handling apparatus 22 to put the piece of cargo into the storage container 6 in accordance with the box packing plan indicated by the loading plan information. Upon completing the loading, the control apparatus 21 transmits a response (loading execution result) indicating the completion of the loading to the planning apparatus 10.

In a case where the loading plan information indicates the allocation of the loading work to the worker 7, the processor 11 causes the display unit 17 to display a notification of the loading to the worker 7. The processor 11 may sound a buzzer or the like.

Here, the worker 7 loads the piece of cargo into the storage container 6 according to the notification. Upon completing the loading, the worker 7 inputs an operation indicating the completion of the loading to the operation unit 16. Upon receiving the input of the operation, the processor 11 may transmit a notification indicating the completion of the loading by the worker 7 to the host system 5 through the communication unit 15.

Upon completing the loading by the work system 20 and the worker 7, the processor 11 transmits a response (loading result) indicating the completion of the loading to the host system 5 through the communication unit 15.

Next, an operation example in which the cargo-handling system 1 performs loading will be described.

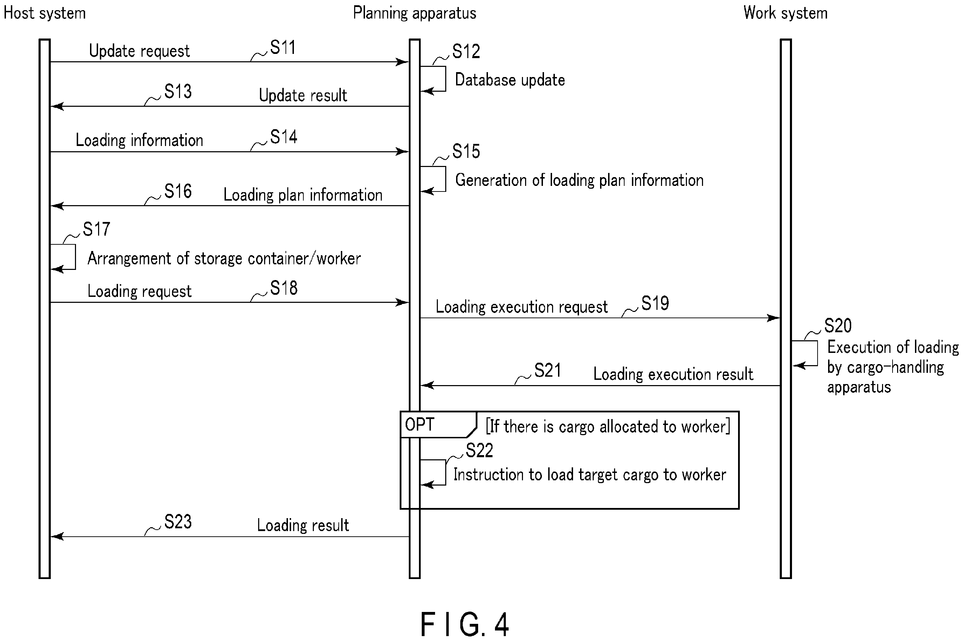

FIG. 4 is a sequence diagram for explaining an operation example in which the cargo-handling system 1 performs loading.

First, the host system 5 transmits an update request to the planning apparatus 10 (S11). The processor 11 of the planning apparatus 10 receives the update request through the communication unit 15. Upon receiving the update request, the processor 11 updates the database in accordance with the update request through the memory device interface 18 (S12). Upon updating the database, the processor 11 transmits the update result to the host system 5 through the communication unit 15 (S13).

The host system 5 receives the update result. Upon receiving the update result, the processor 11 transmits the loading information to the planning apparatus 10 (S14).

The processor 11 of the planning apparatus 10 receives the loading information through the communication unit 15. Upon receiving the loading information, the processor 11 generates loading plan information based on the loading information, the database, and the like (S15).

Upon generating the loading plan information, the processor 11 transmits the generated loading plan information to the host system 5 through the communication unit 15 (S16).

The host system 5 receives the loading plan information. Upon receiving the loading plan information, the host system 5 arranges the storage container 6 and the worker 7 in accordance with the loading plan information (S17) .

Upon completing the arrangement of the storage container 6 and the worker 7, the host system 5 transmits a loading request to the planning apparatus 10 (S18).

The processor 11 of the planning apparatus 10 receives the loading request through the communication unit 15. Upon receiving the loading request, the processor 11 transmits a loading execution request to the work system 20 through the communication unit 15 (S19).

The control apparatus 21 of the work system 20 receives the loading execution request. Upon receiving the loading execution request, the control apparatus 21 causes the cargo-handling apparatus 22 to put the piece of cargo into the storage container 6 in accordance with the loading execution request (S20).

Upon causing the cargo-handling apparatus 22 to put the piece of cargo into the storage container 6, the control apparatus 21 transmits the loading execution result to the planning apparatus 10 (S21).

The processor 11 of the planning apparatus 10 receives the loading execution result. In a case where the loading plan information indicates the allocation of the loading work to the worker 7, the processor 11 displays a notification of loading to the worker 7 on the display unit 17 (S22).

Upon completing the loading by the work system 20 and the worker 7, the processor 11 transmits the loading result to the host system 5 through the communication unit 15 (S23). For example, upon receiving an input of an operation indicating the completion of the loading through the operation unit 16, the processor 11 transmits a loading result to the host system 5.

The host system 5 receives the loading result. When the host system 5 receives the loading result, the cargo-handling system 1 ends the operation.

Next, a case where the cargo-handling system 1 performs unloading will be described.

First, functions realized by the host system 5 will be described.

The host system 5 has a function of transmitting unloading information to the planning apparatus 10. For example, the host system 5 acquires slip information indicating delivery of a piece of cargo or the like from an external device. The host system 5 generates unloading information based on the slip information or the like.

The unloading information indicates a piece of cargo to be unloaded (for example, an ID of the piece of cargo), a storage container 6 in which the piece of cargo is stored (for example, an ID of the storage container 6), and the like.

Upon generating the unloading information, the host system 5 transmits the generated unloading information to the planning apparatus 10.

The host system 5 also has a function of arranging the worker 7.

The host system 5 acquires unloading plan information from the planning apparatus 10. The unloading plan information indicates the cargo-handling apparatus 22 or the like that performs unloading.

In a case where the unloading plan information indicates the allocation of the unloading work to the worker 7, the host system 5 arranges the worker 7 in accordance with the unloading plan information.

For example, the host system 5 issues a notification to the worker 7 to move to a predetermined position and perform work.

The host system 5 also has a function of transmitting an unloading request to request start of unloading work to the planning apparatus 10.

Upon completing the arrangement of the worker 7, the host system 5 transmits the unloading request to the planning apparatus 10. In a case of not arranging the worker 7, the host system 5 may transmit the unloading request to the planning apparatus 10 after receiving the unloading plan information. The host system 5 may transmit an unloading request to the planning apparatus 10 in a case where the delivery of the storage container 6 has been completed.

The host system 5 may transmit the unloading request to the planning apparatus 10 at a timing (for example, the next day or the next week) at which unloading is desired to be performed after the arrangement is completed. In addition, the host system 5 may transmit, as the unloading request, information that indicates a date and time when unloading is to be started, to the planning apparatus 10. That is, the host system 5 may make an unloading start reservation in the planning apparatus 10.

Next, functions realized by the planning apparatus 10 will be described. The functions realized by the planning apparatus 10 are realized by the processor 11 executing the program stored in the internal memory, the ROM 12, the NVM 14, or the like.

The processor 11 has a function of generating unloading plan information.

The processor 11 acquires the unloading information from the host system 5 through the communication unit 15. Upon acquiring the unloading information, the processor 11 acquires the database from the memory device 8 through the memory device interface 18.

Upon acquiring the database, the processor 11 generates unloading plan information based on the unloading information and the database.

For example, the processor 11 refers to the cargo-handling apparatus information in the database and selects the cargo-handling apparatus 22 capable of handling the piece of cargo and the storage container 6 indicated by the unloading information. In a case where there is a piece of cargo that cannot be handled by the cargo-handling apparatus 22, the processor 11 allocates the loading work of the piece of cargo to the worker 7.

Upon selecting the cargo-handling apparatus 22, the processor 11 generates unloading plan information indicating the selected cargo-handling apparatus 22 and the like. In a case where the unloading work is allocated to the worker 7, the unloading plan information further indicates the allocation of the unloading work to the worker 7.

Upon generating the unloading plan information, the processor 11 transmits the generated unloading plan information to the host system 5 through the communication unit 15.

The processor 11 also has a function of causing the work system 20 to perform unloading work.

Here, it is assumed that the worker 7 is arranged by the host system 5.

The processor 11 receives the unloading request through the communication unit 15. Upon receiving the unloading request, the processor 11 transmits an unloading execution request for instructing execution of unloading to the work system 20 including the cargo-handling apparatus 22 indicated by the unloading plan information through the communication unit 15.

The unloading execution request causes the cargo-handling apparatus 22 to unload the piece of cargo from the storage container 6 in accordance with the unloading plan information.

Here, the control apparatus 21 of the work system 20 causes the cargo-handling apparatus 22 to unload the piece of cargo from the storage container 6 in accordance with the unloading execution request. In a case where a piece of cargo that cannot be handled by the cargo-handling apparatus 22 is found, the control apparatus 21 causes the cargo-handling apparatus 22 to temporarily stop unloading. For example, the control apparatus 21 detects an article that cannot be handled by the cargo-handling apparatus 22 by sensing the inside of the storage container 6.

In a case where the cargo-handling apparatus 22 is caused to temporarily stop unloading, the processor 11 transmits to the planning apparatus 10 a notification (an impossibility notification) indicating that an article that cannot be handled by the cargo-handling apparatus 22 has been found.

The processor 11 of the planning apparatus 10 receives the impossibility notification. Upon receiving the impossibility notification, the processor 11 displays a notification of unloading to the worker 7 on the display unit 17. For example, the processor 11 displays, on the display unit 17, information indicating a piece of cargo to be unloaded by the worker 7. The processor 11 may sound a buzzer or the like.

Here, the worker 7 performs unloading from the storage container 6 in accordance with the notification. Upon completing the unloading, the worker 7 inputs an operation indicating the completion of the unloading to the operation unit 16.

Upon receiving the input of the operation, the processor 11 transmits a completion notification indicating the completion of the unloading of the article that cannot be handled by the cargo-handling apparatus 22 to the work system 20 through the communication unit 15.

Here, upon receiving the completion notification, the control apparatus 21 of the work system 20 causes the cargo-handling apparatus 22 to restart unloading from the storage container 6.

Upon completing the unloading, the control apparatus 21 transmits a response (unloading execution result) indicating the completion of the unloading to the planning apparatus 10.

The processor 11 of the planning apparatus 10 receives the unloading execution result through the communication unit 15. Upon receiving the unloading execution result, the processor 11 transmits a response (unloading result) indicating the completion of the unloading to the host system 5 through the communication unit 15.

Next, an operation example in which the cargo-handling system 1 performs unloading will be described.

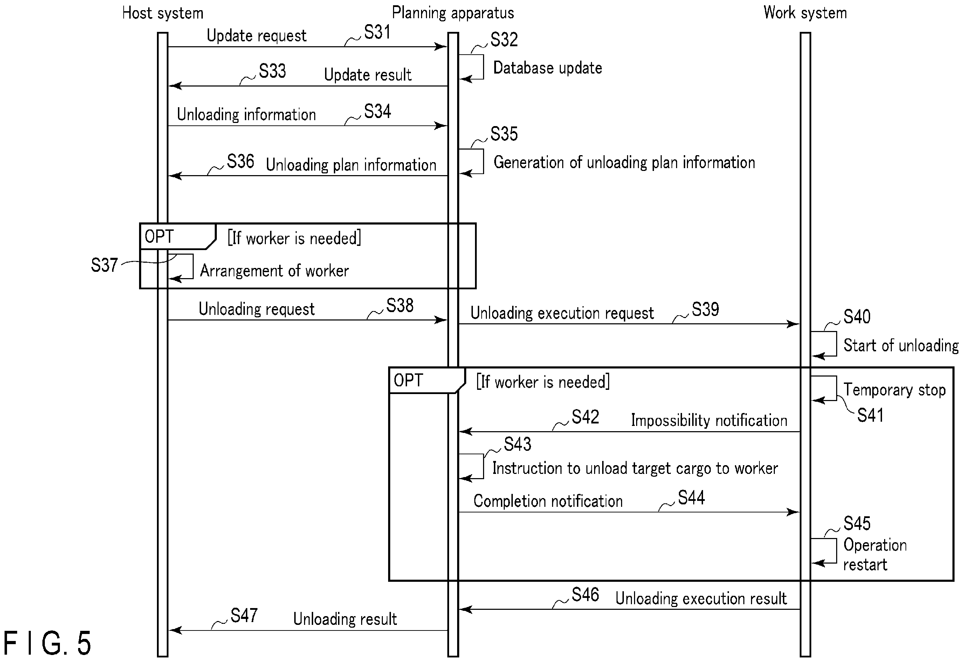

FIG. 5 is a sequence diagram for explaining an operation example in which the cargo-handling system 1 performs unloading.

First, the host system 5 transmits an update request to the planning apparatus 10 (S31). The processor 11 of the planning apparatus 10 receives the update request through the communication unit 15. Upon receiving the update request, the processor 11 updates the database in accordance with the update request through the memory device interface 18 (S32). Upon updating the database, the processor 11 transmits the update result to the host system 5 through the communication unit 15 (S33).

The host system 5 receives the update result. Upon receiving the update result, the processor 11 transmits the unloading information to the planning apparatus 10 (S34).

The processor 11 of the planning apparatus 10 receives the unloading information through the communication unit 15. Upon receiving the unloading information, the processor 11 generates unloading plan information based on the unloading information, the database, and the like (S35).

Upon generating the unloading plan information, the processor 11 transmits the generated unloading plan information to the host system 5 through the communication unit 15 (S36).

The host system 5 receives the unloading plan information. In a case where the unloading plan information indicates the allocation of the unloading work to the worker 7, the host system 5 arranges the worker 7 (S37).

Upon completing the arrangement of the worker 7, the host system 5 transmits the unloading request to the planning apparatus 10 (S38).

The processor 11 of the planning apparatus 10 receives the unloading request through the communication unit 15. Upon receiving the unloading request, the processor 11 transmits an unloading execution request to the work system 20 through the communication unit 15 (S39).

The control apparatus 21 of the work system 20 receives the unloading execution request. Upon receiving the unloading execution request, the control apparatus 21 causes the cargo-handling apparatus 22 to start unloading from the storage container 6 in accordance with the unloading execution request (S40).

If the control apparatus 21 finds a piece of cargo that cannot be handled by the cargo-handling apparatus 22, the control apparatus 21 causes the cargo-handling apparatus 22 to temporarily stop the unloading (S41). When the cargo-handling apparatus 22 is caused to temporarily stop the unloading, the control apparatus 21 transmits an impossibility notification to the planning apparatus 10 (S42) .

The processor 11 of the planning apparatus 10 receives the impossibility notification through the communication unit 15. Upon receiving the impossibility notification, the processor 11 displays a notification of unloading to the worker 7 on the display unit 17 (S43).

Here, the worker 7 unloads the piece of cargo that cannot be handled by the cargo-handling apparatus 22 in accordance with the notification of unloading. Upon completing the unloading of the piece of cargo, the worker 7 inputs an operation indicating the completion of the unloading to the operation unit 16.

The processor 11 of the planning apparatus 10 receives an input of the operation through the operation unit 16. Upon receiving the input of the operation, the processor 11 transmits a completion notification to the work system 20 through the communication unit 15 (S44).

The control apparatus 21 of the work system 20 receives the completion notification. Upon receiving the completion notification, the control apparatus 21 causes the cargo-handling apparatus 22 to restart the unloading work (S45).

In a case where a piece of cargo that cannot be handled by the cargo-handling apparatus 22 is found again, the cargo-handling system 1 returns to S41.

When the cargo-handling apparatus 22 completes the unloading, the control apparatus 21 transmits an unloading execution result to the planning apparatus 10 (S46).

The processor 11 of the planning apparatus 10 receives the unloading execution result through the communication unit 15. Upon receiving the unloading execution result, the processor 11 transmits the unloading result to the host system 5 through the communication unit 15 (S47).

The host system 5 receives the unloading result. When the host system 5 receives the unloading, the cargo-handling system 1 ends the operation.

In a case where the processor 11 of the planning apparatus 10 has recognized in advance the position of a piece of cargo that cannot be handled by the cargo-handling apparatus 22, the processor 11 may stop the cargo-handling apparatus 22 at the timing at which the cargo-handling apparatus 22 is going to unload the piece of cargo.

Further, the processor 11 may not update the database.

The NVM 14 of the planning apparatus 10 may store the database.

The planning apparatus 10 and the control apparatus 21 may be integrally formed.

The host system 5 and the planning apparatus 10 may be integrally formed.

The processor 11 of the planning apparatus 10 may select a plurality of cargo-handling apparatuses 22 for loading and unloading.

The cargo-handling system configured as described above selects a cargo-handling apparatus from among a plurality of cargo-handling apparatuses in accordance with cargo-handling information relating to cargo-handling work. As a result, in a case where the cargo-handling system includes a plurality of cargo-handling apparatuses, the cargo-handling system can formulate a plan for allocating cargo-handling work to an appropriate cargo-handling apparatus.

In addition, the cargo-handling system allocates cargo-handling work of a piece of cargo that cannot be handled by the cargo-handling apparatuses to a worker. As a result, the cargo-handling system can appropriately perform the cargo-handling work of the piece of cargo.

While several embodiments of have been described, these embodiments have been presented by way of example and are not intended to limit the scope of the invention. The novel embodiments described herein can be implemented in a variety of other forms; furthermore, various omissions, substitutions, and changes can be made without departing from the spirit of the invention. The embodiments and their modifications are covered by the accompanying claim and their equivalents, as would fall within the scope and gist of the inventions.

## Claims

1. An information processing apparatus comprising:
a communication interface connected to an external device; and
a processor configured to:
acquire cargo-handling information relating to cargo-handling work through the communication interface; and
select a cargo-handling apparatus to be caused to perform the cargo-handling work from among a plurality of cargo-handling apparatuses based on the cargo-handling information.

2. The information processing apparatus according to claim 1, wherein in a case where the selected cargo-handling apparatus is incapable of handling a piece of cargo that is a target of the cargo-handling work, the processor provides a worker with a notification of the cargo-handling work of the piece of cargo.

3. The information processing apparatus according to claim 2, comprising a display unit configured to display the notification.

4. The information processing apparatus according to any one of claims 1 to 3, wherein:
the communication interface is connected to control apparatuses that respectively control the cargo-handling apparatuses; and
the processor is configured to transmit, through the communication interface, a control signal for causing the selected cargo-handling apparatus to perform the cargo-handling work to a control apparatus that controls the selected cargo-handling apparatus.

5. The information processing apparatus according to any one of claims 1 to 4, wherein:
the cargo-handling information indicates a piece of cargo that is a target of the cargo-handling work; and
the processor is configured to select the cargo-handling apparatus to be caused to perform the cargo-handling work from among the cargo-handling apparatuses based on cargo information relating to the piece of cargo.

6. The information processing apparatus according to claim 5, wherein:
the cargo-handling work is loading work; and
the processor is configured to select the cargo-handling apparatus to be caused to perform the cargo-handling work from among the cargo-handling apparatuses based on storage container information relating to a plurality of storage containers.

7. The information processing apparatus according to claim 6, wherein the processor is configured to:
select a storage container for storing the piece of cargo from among the storage containers based on the cargo information and the storage container information; and
select a cargo-handling apparatus capable of handling the selected storage container and the piece of cargo as the cargo-handling apparatus to be caused to perform the cargo-handling work.

8. The information processing apparatus according to claim 6 or 7, wherein the processor is configured to cause the cargo-handling apparatus to first put a piece of cargo loadable by the cargo-handling apparatus into the storage container.

9. The information processing apparatus according to claim 5, wherein:
the cargo-handling work is unloading work;
the cargo-handling information indicates a storage container for storing the piece of cargo; and
the processor is configured to select a cargo-handling apparatus capable of handling the storage container and the piece of cargo as the cargo-handling apparatus to be caused to perform the cargo-handling work.

10. An information processing method executed by a processor, the method comprising:
acquiring cargo-handling information relating to cargo-handling work; and
selecting a cargo-handling apparatus to be caused to perform the cargo-handling work from among a plurality of cargo-handling apparatuses based on the cargo-handling information.

11. A program executed by a processor, the program causing the processor to realize:
a function of acquiring cargo-handling information relating to cargo-handling work; and
a function of selecting a cargo-handling apparatus to be caused to perform the cargo-handling work from among a plurality of cargo-handling apparatuses based on the cargo-handling information.

12. A system comprising an information processing apparatus and a work system,
the information processing apparatus including:
a communication interface connected to an external device and control apparatuses configured to respectively control a plurality of cargo-handling apparatuses; and
a processor configured to
acquire cargo-handling information relating to cargo-handling work through the communication interface;
select a cargo-handling apparatus to be caused to perform the cargo-handling work from among the cargo-handling apparatuses based on the cargo-handling information; and
transmit, through the communication interface, a control signal for causing the selected cargo-handling apparatus to perform the cargo-handling work to a control apparatus configured to control the selected cargo-handling apparatus,
the work system including:
a cargo-handling apparatus configured to perform the cargo-handling work; and
a control apparatus configured to control the cargo-handling apparatus in accordance with the control signal.
